# EUROPEAN PATENT SPECIFICATION

(11) **EP 2 713 838 B1**
(45) Date of publication and mention of the grant of the patent: **06.04.2016**
(21) Application number: 12738171.3
(22) Date of filing: 28.05.2012
(51) Int. Cl.: A47J 31/40, A47J 31/44, B67D 1/08, G07F 13/06

(54) **BEVERAGE VENDING MACHINE**
GETRÄNKEVERKAUFSAUTOMAT
DISTRIBUTEUR DE BOISSONS

(30) Priority: 27.05.2011 IT TO20110466
(43) Date of publication of application: 09.04.2014
(73) Proprietor: N&W Global Vending S.p.A., Valbrembo (IT)
(72) Inventor: BRUSADELLI, Ettore, 23883 Brivio (IT)
(74) Representative: Giannini, Manuela
(86) International application number: PCT/IB2012/001032
(87) International publication number: WO 2012/164369

(56) References cited:
- EP-A1- 1 207 131
- EP-A2- 2 297 024

## Description

### TECHNICAL FIELD

The present invention relates to a beverage vending machine.

More specifically, the present invention relates to a beverage vending machine of the type comprising a take-out compartment accessible from the outside and having a beverage-making station; beverage dispensing means located at the beverage-making station, in a fixed position facing the take-out compartment; and cup feed means for feeding cups into position beneath the dispensing means.

### BACKGROUND ART

A vending machine of the above type is described in EP2297024 filed by the Applicant, and, for example, in EP1207131.

The cup feed means normally comprise a semicircular seat designed to receive a cup with its mouth facing upwards, and which is movable inside the take-out compartment between a cup receiving position, and a fill position in which the seat supports the cup under the dispensing means at the beverage-making station.

The seat being rigid, and because the size of the cups that can be accommodated safely in the seat depends largely on the size of the seat itself, it follows that the cups used on the vending machine must all be the same or more or less the same size.

Given the range of beverages a vending machine of the type described is normally designed to produce, having to use cups of only one size obviously represents a serious limitation in terms of both beverage presentation and quality.

### DISCLOSURE OF INVENTION

It is an object of the present invention to provide an improved beverage vending machine of the above type, designed to eliminate the above drawback.

According to the present invention, there is provided a beverage vending machine as claimed in Claim 1 and preferably in any one of the Claims depending directly or indirectly on Claim 1.

### BRIEF DESCRIPTION OF THE DRAWINGS

A non-limiting embodiment of the present invention will be described by way of example with reference to the attached drawings, in which :
Figure 1 shows a view in perspective, with parts removed for clarity, of a preferred embodiment of the vending machine according to the present invention;
Figure 2 shows a larger-scale side view in perspective of a detail in Figure 1;
Figure 3 shows a topside view in perspective of the Figure 2 detail;
Figures 4a to 4f show schematics, with parts removed for clarity, of a Figure 1 detail in different operating configurations;
Figures 5a to 5h show schematics, with parts removed for clarity, of the Figure 4 detail in respective further operating configurations.

### BEST MODE FOR CARRYING OUT THE INVENTION

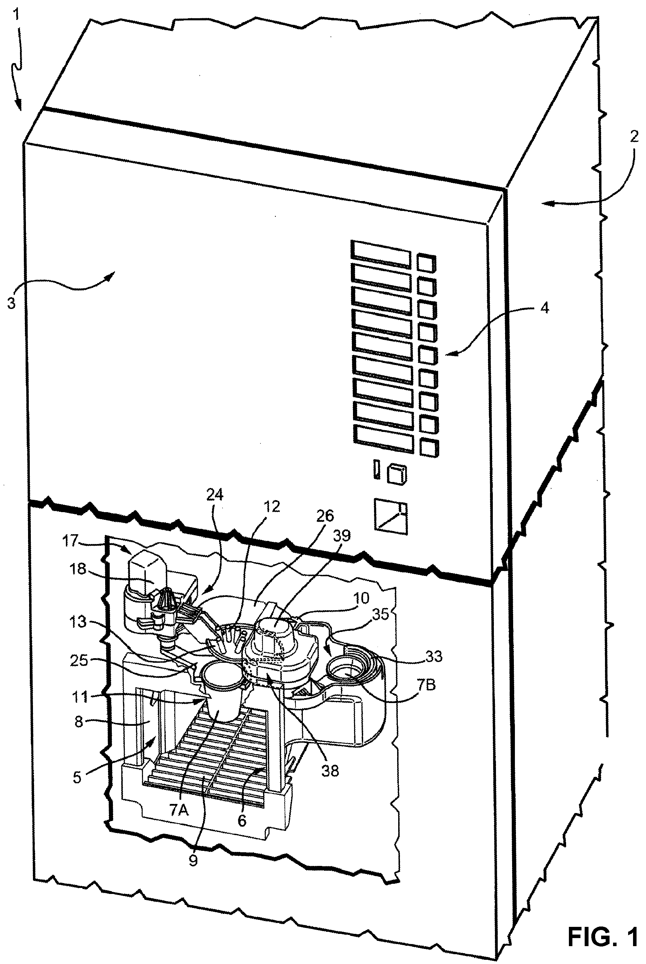

Number 1 in Figure 1 indicates as a whole a beverage vending machine comprising a cabinet 2 closed at the front by a door 3, which has a beverage selection button panel 4, and, beneath panel 4, a take-out compartment 5 accessible from the outside through an opening 6 formed in door 3 and normally closed by a transparent hatch (not shown) allowing the user to remove a cup 7 containing the selected beverage.

Compartment 5 extends inwards of cabinet 2 from opening 6, and is bounded by a lateral wall 8; a bottom wall 9 in the form of a grille; and a top wall 10 with a number of openings communicating with the inside of cabinet 2.

More specifically, close to opening 6, wall 10 has a hole, which defines, inside compartment 5, a beverage-making station 11 located directly beneath and facing a number of dispenser nozzles 12 forming the end portion of a known dispenser unit (not shown) housed inside cabinet 2 to dispense the liquid and powdered ingredients of the user-selected beverage by means of nozzles 12.

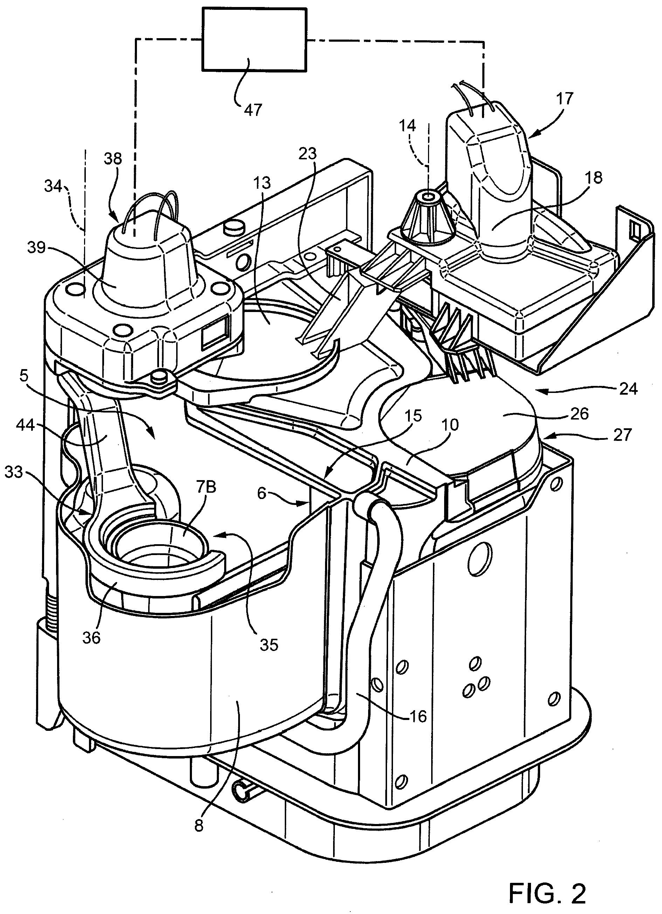

As shown in Figure 2, to protect nozzles 12 against vandalism, machine 1 comprises a guard cover 13, which is located inside cabinet 2, directly over top wall 10, is larger than said hole in top wall 10, and is mounted to swing, about a vertical axis 14, between a normal hole-closing position, in which cover 13 faces and separates nozzles 12 from compartment 5, and a hole-opening position, in which cover 13 opens the hole completely or at least partly, so that all or at least some of nozzles 12 communicate directly with compartment 5.

Besides protecting nozzles 12, cover 13 also provides for catching any drips from nozzles 12 at the end of the dispensing stage. Accordingly, cover 13 is in the form of a tray positioned with its concavity facing nozzles 12, and having a hole (not shown in Figure 2) which, when cover 13 is closed, communicates with a drain cavity 15 formed in top wall 10 and in turn communicating by a pipe 16 with a removable drip container (not shown).

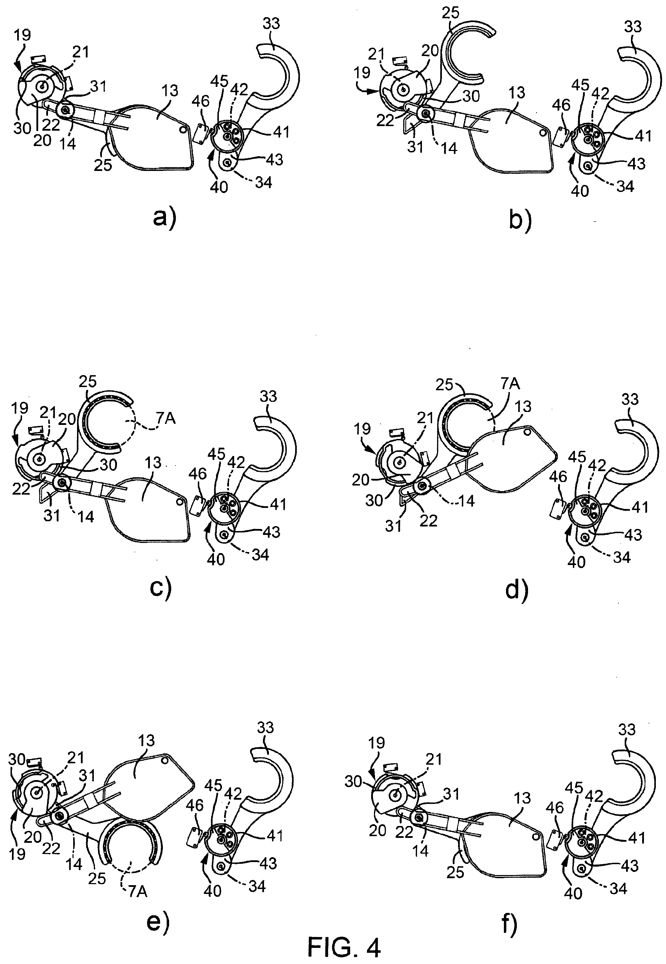

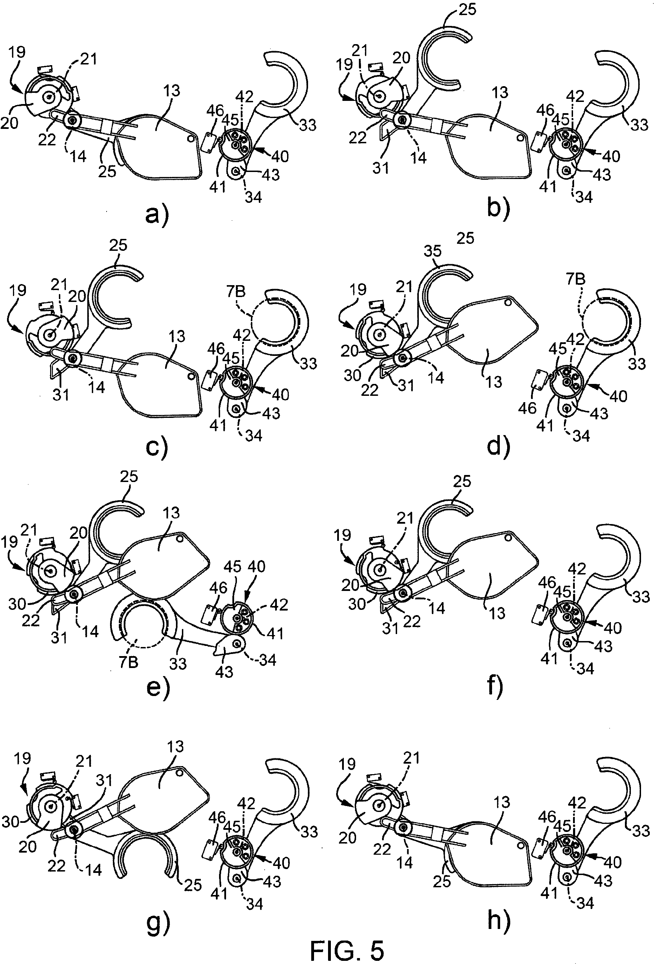

Cover 13 is moved between the open and closed positions by a drive assembly 17 housed inside cabinet 2, above compartment 5, and which comprises a motor reducer 18; and a cam transmission device 19 (Figures 4, 5) comprising a disk cam 20, which is fitted to an output shaft of motor reducer 18 rotating about an axis 21 parallel to axis 14, and controls a cam follower 22 connected rigidly to cover 13 by an arm 23 extending from axis 14 to cover 13 and connected rigidly to cover 13.

Cover 13 and drive assembly 17 form part of a powered unit 24, which also comprises a cup-holder 25 movable inside compartment 5; and a shutter 26 for controlling an opening through which to feed cups 7 to compartment 5.

Powered unit 24 is of the type described and illustrated in EP2297024, to which the reader is referred for a detailed description of its design and operation.

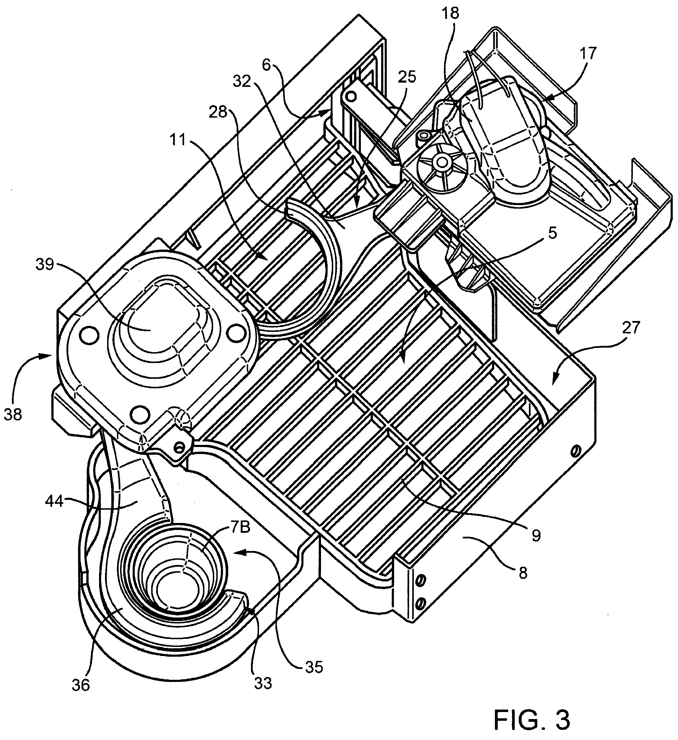

As shown in Figure 3, cup-holder 25 is located directly beneath top wall 10, and is powered by drive assembly 17 to swing about axis 14 and move, inside compartment 5 and in a horizontal plane, between a cup feed station 27 at the rear of compartment 5, and beverage-making station 11.

Cup-holder 25 comprises a semicircular seat 28, which lies in a horizontal plane crosswise to axes 14 and 21, and is movable by drive assembly 17 between a normal rest and beverage-making position (Figures 4a, 4e) - in which seat 28 is located at beverage-making station 11, facing nozzles 12 - and a cup receiving position (Figures 4c, 4d) - in which seat 28 is located at cup feed station 27. Accordingly, seat 28 is designed to be engaged axially, in the receiving position, by a cup 7, and to hold cup 7 in an upright position in which an inner lateral surface of seat 28 cooperates with a truncated-cone-shaped lateral wall or an outer radial end flange of cup 7.

Seat 28 has a lateral opening, which allows the user to remove cup 7 transversely in the rest and beverage-making position.

Obviously, the size of cup 7 that seat 28 can accommodate and retain firmly upright depends largely on the size of seat 28 itself, and in particular on the area of the circle bounded by its inner lateral surface. Which means seat 28 can only receive cups 7 of a given size or, at most, of more or less the same size. Hereinafter, the cups 7 receivable by seat 28 are indicated 7A.

Cup-holder 25 is moved between the rest and beverage-making position and the receiving position by drive assembly 17 and cam transmission device 19, which, for this purpose, comprises a disk cam 30, which rotates about axis 21 and controls a cam follower 31 integral with one end of a cup-holder supporting arm 32 extending from axis 14 to seat 28 and connected rigidly to seat 28.

As shown in Figure 2, feed station 27 for supplying cups 7A is defined inside compartment 5 by an opening formed through top wall 10, and through which to drop into cup-holder 25 a cup 7A released by a known release device (not shown) from the bottom of a stack of cups (not shown) inside cabinet 2.

Shutter 26 keeps this opening closed when not feeding a cup 7A into cup-holder 25, to prevent access through compartment 5 to the inside of cabinet 2, and malicious damage to the stack of cups 7A and other devices (not shown) inside machine 1. Accordingly, shutter 26 is located directly over top wall 10, and comprises a cover plate; and a supporting arm integral with the plate and connected mechanically by a joint (not shown) to arm 32 of cup-holder 25, so that, in use, cup-holder 25 swings shutter 26, about axis 14, between a normal closed position assumed when cup-holder 25 is in the rest and beverage-making position, and an open position assumed when cup-holder 25 is in the receiving position.

With reference to Figures 1, 2 and 3, machine 1 also comprises a further cup-holder 33 for employing cups 7 - hereinafter indicated 7B - of a different size from cups 7A handled by cup-holder 25. In the example shown, cups 7A have a mouth diameter of roughly 70 mm, and cups 7B a mouth diameter of roughly 57 mm.

Cup-holder 33 is located inside compartment 5, facing cup-holder 25, lies in substantially the same plane as cup-holder 25, and is mounted to swing, in a horizontal plane and about an axis 34 parallel to axis 14, between a normal rest and cup 7B receiving position (Figures 2, 3, 5a), in which cup-holder 33 is located inside a cavity of lateral wall 8 adjacent to opening 6, and a beverage-making position (Figure 5e), in which cup-holder 33 is located at beverage-making station 11, beneath nozzles 12.

In the rest and receiving position, cup-holder 33 is located beneath an opening formed in top wall 10, and which defines, inside compartment 5, a feed station 35 for supplying cups 7B released one by one by a known release device (not shown) from the bottom of a stack of cups 7B (not shown) inside cabinet 2.

Like cup-holder 25, cup-holder 33 comprises a semicircular seat 36, which lies in a horizontal plane crosswise to axes 34 and 14, and is designed to be engaged axially, in the rest and receiving position, by a cup 7B, and to hold cup 7B in an upright position, in which an inner lateral surface of seat 36 cooperates with a truncated-cone-shaped lateral wall or an outer radial end flange of cup 7B.

Seat 36 has a lateral opening, which allows the user to remove cup 7B transversely in the beverage-making position.

Cup-holder 33 is moved between the rest and receiving position and the beverage-making position by a drive assembly 38 located over top wall 10 and comprising a motor reducer 39 and a cam transmission device 40 (Figures 4, 5). More specifically, transmission device 40 comprises a disk cam 41, which is fitted to an output shaft of motor reducer 39 rotating about an axis 42, and controls a cam follower 43 integral with a free end of an arm 44, which supports cup-holder 33, extends from axis 34 to seat 36, and is connected rigidly to seat 36.

Transmission device 40 also comprises a further disk cam 45 fitted to the output shaft of motor reducer 39 and for operating an origin switch 46 designed to determine the angular position of cup-holder 33 about axis 34; which angular position indicates when certain operating positions have been reached.

Machine 1 also comprises an electronic central control unit 47 (Figure 2) connected electrically to drive assemblies 17 and 38, and designed to control the operating sequence of cover 13 and cup-holders 25 and 33, depending on the beverage selected by the user.

Operation of machine 1 will now be described with reference to two operating sequences : one produced by selection of a beverage to be served in a cup 7A, and the other by selection of a beverage to be served in a cup 7B.

First, however, it should be pointed out that, when not operating, machine 1 is set to a standby configuration, which defines the first and last configuration of each operating sequence, and in which (Figures 4a, 4f, 5a, 5h) cover 13 is in the closed position protecting nozzles 12, cup-holder 25 is in the rest and beverage-making position, and cup-holder 33 is in the rest and receiving position.

For the sake of clarity, the Figure 4 and 5 schematics illustrating the two operating sequences do not show shutter 26, the movement of which is tied to the movement of cup-holder 25 as described above.

### SEQUENCE USING CUPS 7A (Figure 4)

- Figure 4a : machine 1 is in the standby configuration described above.
- Figure 4b : electronic central control unit 47 activates motor reducer 18 to oscillate cam 30 and so move cup-holder 25 from the rest and beverage-making position to the cup 7A receiving position. Cam 20 is shaped to ensure that, throughout this stage, in which the output shaft of motor reducer 18 rotates continuously, cover 13 remains in the closed position.
- Figure 4c : the cup 7A release device (not shown) feeds a cup 7A to cup-holder 25. Cams 20 and 30 are so shaped that, despite being rotated continuously about axis 21 by motor reducer 18, cover 13 and cup-holder 25 remain stationary long enough to dispense cup 7A.

- Figure 4d : the action of cam 20 on cam follower 22 moves cover 13 from the closed to the open position to uncover nozzles 12.
- Figure 4e : the action of cam 30 on cam follower 31 moves cup-holder 25 back into the beverage-making position, while the shape of cam 20 keeps cover 13 in the open position. Upon cup-holder 25, with cup 7A, reaching the beverage-making position, motor reducer 18 is stopped long enough for nozzles 12 to dispense the beverage ingredients.
- Figure 4f : once the beverage ingredients are dispensed, electronic central control unit 47 re-activates motor reducer 18; rotation of cam 20 moves cover 13 back into the closed position; and cup-holder 25 remains stationary in the beverage-making position to allow the user to remove the full cup 7A.

In connection with the above, it should be pointed out that, in addition to cams 20 and 30, actuating device 19 also comprises other disk cams for controlling respective switches designed to determine and indicate to electronic central control unit 47 the angular positions, about axis 14, of the component parts of powered unit 24 in given operating configurations. Also, as will be clear from the above description, throughout the operating sequence, drive assembly 38 is not activated, and cup-holder 33 remains stationary in the rest and receiving position.

### SEQUENCE USING CUPS 7B (Figure 5)

- Figure 5a : machine 1 is in the standby position described above.
- Figure 5b : electronic central control unit 47 activates motor reducer 18 to oscillate cam 30 and so move cup-holder 25 from the rest and beverage-making position to the receiving position, thus clearing beverage-making station 11.
- Figure 5c : the cup 7B release device (not shown) feeds a cup 7B to cup-holder 33. Cams 20 and 30 are so shaped that, despite being rotated continuously about axis 21 by motor reducer 18, cover 13 and cup-holder 25 remain stationary long enough to dispense cup 7B.
- Figure 5d : the action of cam 20 on cam follower 22 moves cover 13 from the closed to the open position to uncover nozzles 12.
- Figure 5e : at this point, central control unit 47 deactivates motor reducer 18 and activates motor reducer 39, the output shaft of which starts rotating about axis 42 integrally with cam 41, which, contacting cam follower 43, moves cup-holder 33 from the rest and receiving position to the beverage-making position. Simultaneous rotation of cam 45, on the other hand, closes switch 46, which signals to electronic central control unit 47 the start of the cup-holder 33 operating cycle. Upon cup-holder 33, with cup 7B, reaching the beverage-making position, motor reducer 39 is stopped long enough for nozzles 12 to dispense the beverage ingredients, and for the user to remove the full cup 7B. Removal of the cup is detected by a photocell (not shown) and signalled to electronic central control unit 47.
- Figure 5f : electronic central control unit 47 re-activates motor reducer 39 to rotate cam 45 and so move cup-holder 33 back to the rest and receiving position. Cam 45 is shaped so that, as cup-holder 33 reaches the rest and receiving position, switch 46 opens to signal to electronic central control unit 47 the end of the cup-holder 33 operating cycle.
- Figure 5g : at this point, central control unit 47 stops motor reducer 39 and re-activates motor reducer 18 to rotate cam 30 and so move cup-holder 25, with no cup, back to the rest and beverage-making position.
- Figure 5h : motor reducer 18 is kept running until rotation of cam 20 moves cover 13 back to the closed position.

## Claims

1. A beverage vending machine comprising :
- a take-out compartment (5) accessible from the outside and having a beverage-making station (11);
- beverage dispensing means (12) located at the beverage-making station (11), in a fixed position facing said compartment (5); and
- feed means (25, 33) for feeding cups (7) into position beneath said dispensing means (12);
the machine (1) being **characterized in that** said feed means (25, 33) comprise a first (25) and second (33) cup-holder designed to receive cups (7A, 7B) of respective different sizes; actuating means (17, 38) being provided to selectively operate the first and second cup-holder (25, 33) independently of each other, to move the respective cups (7A, 7B) along respective different paths between respective different receiving positions and a common beverage-making position at the beverage-making station (11).

2. A machine as claimed in Claim 1, wherein the first and second cup-holder (25, 33) are located facing each other inside the compartment (5), and are mounted to oscillate, about a first (14) and second (34) axis respectively, between the respective receiving positions and the common beverage-making position.

3. A machine as claimed in Claim 2, wherein the first and second axis (14, 34) are parallel.

4. A machine as claimed in Claim 2 or 3, wherein the first and second axis (14, 34) are vertical.

5. A machine as claimed in one of the foregoing Claims, wherein the first and second cup-holder (25, 33) are movable to and from respective rest positions; the rest position of the first cup-holder (25) coinciding with the common beverage-making position; and the rest position of the second cup-holder (33) coinciding with the respective receiving position.

6. A machine as claimed in one of the foregoing Claims, and comprising an electronic control unit (47) for controlling the actuating means (17, 38) to move the first and second cup-holder (25, 33) as a function of the user-selected type of beverage; the first and second cup-holder (25, 33) being mounted to rotate about a first (14) and second (34) axis respectively; and the actuating means (17, 38) comprising, for each said first and second cup-holder (25, 33), a respective motor reducer (18, 39), respective cam transmission means (19, 40), and respective recognition means for determining the angular position about the first and second axis (14, 34) respectively.

7. A machine as claimed in Claim 5 and 6, wherein the electronic control unit (47) is designed to only allow the second cup-holder (33) to move from its rest position to the common beverage-making position after the first cup-holder (25) has been moved from its rest position to its receiving position.

## Patentansprüche

1. Getränkeverkaufsautomat umfassend:
• ein Herausnahmefach (5), das von außen zugänglich ist und eine Getränkeherstellungsstation (11) hat;
• Getränkeabgabemittel (12), die sich an der Getränkeherstellungsstation (11) in einer festen Position gegenüber dem Fach (5) befinden; und
• Zufuhrmittel (25, 33) zum Zuführen von Bechern (7) in eine Position unterhalb den Abgabemitteln (12);
wobei der Automat (1) **dadurch gekennzeichnet ist, dass** die Zuführmittel (25, 33) einen ersten (25) und einen zweiten Becherhalter (33) umfassen, die dazu konstruiert sind, Becher (7A, 7B) von jeweils unterschiedlichen Größen aufzunehmen; Betätigungsmittel (17, 38) bereitgestellt sind, um wahlweise den ersten und den zweiten Becherhalter (25, 33) unabhängig voneinander zu betreiben, um die jeweiligen Becher (7A, 7B) entlang jeweils unterschiedlichen Wegen zwischen jeweils unterschiedlichen Aufnahmepositionen und einer gemeinsamen Getränkeherstellungsposition an der Getränkeherstellungsstation (11) zu bewegen.

2. Automat gemäß Anspruch 1, wobei der erste und der zweite Becherhalter (25, 33) sich gegenüber voneinander in dem Fach (5) befinden und dazu montiert sind, sich um eine erste (14) beziehungsweise eine zweite (34) Achse herum zwischen den jeweiligen Aufnahmepositionen und der gemeinsamen Getränkeherstellungsposition hin und her zu bewegen.

3. Automat gemäß Anspruch 2, wobei die erste und die zweite Achse (14, 34) parallel sind.

4. Automat gemäß Anspruch 2 oder 3, wobei die erste und die zweite Achse (14, 34) senkrecht sind.

5. Automat gemäß irgendeinem der vorhergehenden Ansprüche, wobei der erste und der zweite Becherhalter (25, 33) zu und fort von jeweiligen Ruhepositionen bewegbar sind; wobei die Ruheposition des ersten Becherhalters (25) mit der gemeinsamen Getränkeherstellungsposition übereinstimmt; und die Ruheposition des zweiten Becherhalters (33) mit der jeweiligen Aufnahmeposition übereinstimmt.

6. Automat gemäß irgendeinem der vorhergehenden Ansprüche, und umfassend eine elektronische Steuereinheit (47) um die Betätigungsmittel (17, 38) zum Bewegen des ersten und zweiten Becherhalters (25, 33) als eine Funktion der vom Anwender gewählten Art des Getränks anzusteuern; wobei der erste und der zweite Becherhalter (25, 33) dazu montiert sind, sich um eine erste (14) beziehungsweise eine zweite (34) Achse herum zu drehen; und die Betätigungsmittel (17, 38) für jeden aus dem ersten und dem zweiten Becherhalter (25, 33) eine jeweilige Motoruntersetzung (18, 39), jeweilige Nockenübertragungsmittel (19, 40) und jeweilige Erkennungsmittel zum Bestimmen der Winkelstellung um die erste beziehungsweise die zweite Achse (14, 34) herum umfassen.

7. Automat gemäß Anspruch 5 und 6, wobei die elektronische Steuereinheit (47) dazu eingerichtet ist, den zweiten Becherhalter (33) sich nur von seiner Ruheposition zu der gemeinsamen Getränkeherstellungsposition bewegen zu lassen, nachdem der erste Becherhalter (25) sich aus seiner Ruheposition zu seiner Empfangspositionen bewegt hat.

## Revendications

1. Machine de distribution de boisson, comprenant :
- un compartiment extracteur (5) accessible depuis l'extérieur et doté d'une station de fabrication de boisson (11) ;
- des moyens de distribution de boisson (12) situés dans la station de fabrication de boisson (11), dans une position fixe face audit compartiment (5) ; et
- des moyens d'alimentation (25, 33) pour alimenter des tasses (7) dans la position sous lesdits moyens de distribution (12) ;
la machine (1) étant **caractérisée en ce que** lesdits moyens d'alimentation (25, 33) comprennent un premier (25) et un second (33) support de tasse conçus pour recevoir des tasses (7A, 7B) de tailles différentes respectives ; des moyens d'actionnement (17, 38) étant ménagés de façon à faire fonctionner sélectivement le premier et le second support de tasse (25, 33) indépendamment l'un de l'autre, pour déplacer les tasses respectives (7A, 7B), le long de chemins différents respectifs, entre différentes positions de réception respectives et une position de fabrication de boisson commune dans la station de fabrication de boisson (11).

2. Machine selon la revendication 1, dans laquelle le premier et le second support de tasse (25, 33) sont situés l'un en face de l'autre à l'intérieur du compartiment (5) et sont montés de façon à osciller, autour d'un premier (14) et d'un second (34) axe respectivement, entre les positions de réception respectives et la position de fabrication de boisson commune.

3. Machine selon la revendication 2, dans laquelle le premier et le second axe (14, 34) sont parallèles.

4. Machine selon la revendication 2 ou 3, dans laquelle le premier et le second axe (14, 34) sont verticaux.

5. Machine selon l'une des revendications précédentes, dans laquelle le premier et le second support de tasse (25, 33) sont mobiles vers et depuis des positions de repos respectives ; la position de repos du premier support de tasse (25) coïncidant avec la position de fabrication de boisson commune ; et la position de repos du second support de tasse (33) coïncidant avec la position de réception respective.

6. Machine selon l'une des revendications précédentes et comprenant une unité de commande électronique (47) pour commander les moyens d'actionnement (17, 38), afin de déplacer le premier et le second support de tasse (25, 33) en fonction du type de boisson choisi par l'utilisateur ; le premier et le second support de tasse (25, 33) étant montés de façon à tourner autour d'un premier (14) et d'un second (34) axe respectivement ; et les moyens d'actionnement (17, 38) comprenant, pour chacun desdits premier et second support de tasse (25, 33) un réducteur de moteur respectif (18, 39), des moyens de transmission à came respectifs (19, 40) et des moyens de reconnaissance respectifs pour déterminer la position angulaire autour du premier et du second axe (14, 34) respectivement.

7. Machine selon les revendications 5 et 6, dans laquelle l'unité de commande électronique (47) est conçue pour permettre uniquement au second support de tasse (33) de se déplacer de sa position de repos à la position de fabrication de boisson commune, après que le premier support de tasse (25) a été déplacé de sa position de repos à sa position de réception.
